# DEMANDE DE BREVET EUROPEEN

(11) **EP 1 382 944 A1**
(43) Date de publication de la demande: **21.01.2004**
(21) Numéro de dépôt: 03300054.8
(22) Date de dépôt: 08.07.2003
(51) Int. Cl.: G01F 3/08

(54) **Compteur volumétrique de fluide**

(30) Priorité: 09.07.2002 FR 0209001
(71) Demandeur: Actaris S.A.S., 92542 Montrouge (FR)
(72) Inventeur: Demia, Laurent, 71000, MACON (FR); Droin, Frédéric, 69400, Liergues (FR)
(74) Mandataire: Feray, Valérie

(57) **Abrégé**

L'invention concerne le domaine technique des compteurs volumétriques de fluide à piston oscillant. Un tel compteur comprend une chambre de mesure cylindrique incluant une paroi latérale, un fond (1) et un couvercle (3), un cylindre inférieur (4) et supérieur (5) de même diamètre inférieur au diamètre de ladite chambre, une ouïe d'entrée et une ouïe de sortie (8) pour respectivement l'admission et l'évacuation du fluide dans ladite chambre, un piston (11) de forme cylindrique disposé de façon excentrique et guidé cinématiquement dans ladite chambre, ledit piston effectuant un mouvement oscillant dans ladite chambre sous l'action du déplacement d'un volume de fluide, une cloison fixe (9) séparant ladite ouie d'entrée et ladite ouie de sortie, ladite cloison s'étendant radialement entre ladite paroi latérale et lesdits cylindres inférieur et supérieur et axialement entre ledit fond et ledit couvercle. Ledit compteur comporte en outre au moins une rainure verticale (17) s'étendant au moins partiellement le long desdits cylindres inférieur et supérieur et en relation avec l'une desdites ouïes d'entrée ou de sortie, ladite rainure étant située à proximité de ladite cloison fixe.

## Description

L'invention se rapporte à un compteur volumétrique de fluide destiné à mesurer le débit d'un fluide s'écoulant dans une canalisation.

L'invention concerne plus particulièrement le domaine technique des compteurs volumétriques de fluide à piston oscillant dont la technique est bien connue par l'homme du métier.

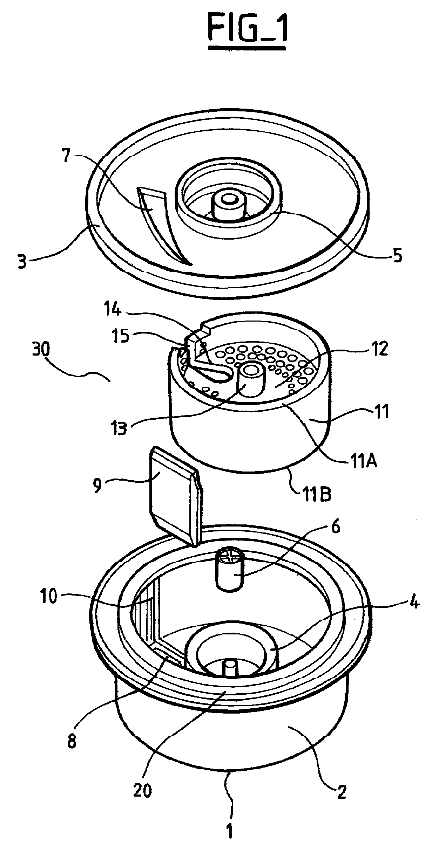

Un tel compteur connu comporte une boîte mesurante comme représenté sur la figure 1 en perspective éclatée.

Dans ce type de compteur, la boîte mesurante est l'élément essentiel dont dépend la précision de mesure du débit. La boîte mesurante est une chambre de forme cylindrique 30 qui comprend un fond 1, une paroi latérale 2 et un couvercle 3. Le fond 1 et le couvercle 3 comportent respectivement un cylindre inférieur 4 et supérieur 5, de même diamètre, ce diamètre étant inférieur à celui de la chambre. Les deux cylindres 4, 5 sont centrés sur l'axe de la chambre. Le cylindre inférieur comporte en son centre une tige métallique 28 sur laquelle vient s'emboîter un galet 6. Le fond et le couvercle sont munis d'au moins une ouïe d'entrée 7 et une ouïe de sortie 8 pour respectivement l'admission et l'évacuation du fluide dans la chambre. La chambre 30 comporte également une cloison fixe 9 de forme rectangulaire, séparant l'ouïe d'entrée 7 et l'ouïe de sortie 8. La cloison s'étend radialement entre la paroi latérale 2 et les cylindres inférieur 4 et supérieur 5 et axialement entre le fond 1 et le couvercle 3. Le fond, la paroi latérale, le couvercle et les cylindres inférieur et supérieur comportent une rainure 10 dans laquelle vient s'encastrer la cloison. Un piston 11 de forme cylindrique de diamètre inférieur à celui de la chambre mais supérieur aux diamètres des cylindres inférieur et supérieur est positionné de manière excentrique à l'intérieur de la chambre. Le piston 11 comporte à mi-hauteur une paroi plane 12 perforée de trous et supportant en son centre deux tétons 13, l'un dirigé vers le fond, l'autre vers le couvercle. La paroi comporte également une lumière 14 en forme de poire orientée radialement et positionnée de manière excentrique. La lumière en forme de poire débouche sur une fente 15 pratiquée sur toute la hauteur du piston.

Le compteur comportant une telle boîte mesurante fonctionne selon le principe de l'admission d'un volume donné de fluide par l'ouïe d'entrée 7 dans la chambre 30 qui en communiquant son énergie au piston provoque son déplacement en rotation et son évacuation vers l'ouïe de sortie 8. Ainsi, chaque révolution du piston 11 correspond au passage d'un volume de fluide donné. Le mouvement général du piston est un mouvement oscillant, l'axe du piston décrivant un cercle autour de l'axe de la chambre 30 et la fente 15 du piston glissant le long de la cloison 9. Le piston est guidé cinématiquement dans la chambre 30 grâce à l'engagement de la cloison 9 dans la fente verticale 15 et dans la lumière 14 en forme de poire ainsi que par l'engagement du téton 13 entre le galet 6 et le cylindre inférieur 4. La paroi plane du piston, bien que positionnée entre le cylindre inférieur 4 et supérieur 5, reste libre de se mouvoir dans un plan.

L'invention concerne donc un compteur volumétrique de fluide du type à piston oscillant comprenant une chambre cylindrique comportant une paroi latérale, un fond et un couvercle, ainsi qu'un piston de forme cylindrique disposé de façon excentrique et guidé cinématiquement dans la chambre, le piston effectuant un mouvement oscillant dans la chambre sous l'action du déplacement d'un volume de fluide et présentant des faces glissantes sur des parties fixes de la chambre.

Un problème particulier lié à ce type de compteur est leur mauvais comportement lors du comptage d'eau transportant des particules solides telles que des grains de sable. En effet, les jeux entre les différents éléments constituant la chambre sont tels qu'un simple grain de sable peut entraîner un blocage complet du mouvement du piston ou tout au moins une baisse significative des performances métrologiques au fil du temps. L'effet de ces particules solides est particulièrement sensible aux coins de la cloison fixe de séparation de l'ouïe d'entrée et de l'ouïe de sortie. Cette faiblesse exclut aujourd'hui cette technologie de comptage de nombreux marchés dans des zones géographiques où l'eau est dite « chargée ». De même, lors d'une intervention sur un réseau dans le cas d'une mise en service ou de travaux de maintenance, il se peut que l'eau contiennent des particules solides.

Le document WO93/22631 décrit une solution à ce problème. A cet effet, ce document décrit un compteur volumétrique comportant une rainure se trouvant sur la paroi de la chambre mesurante à proximité de la cloison fixe séparant l'ouïe d'entrée et l'ouïe de sortie, cette rainure permettant l'évacuation des particules solides se trouvant dans le fluide via un élargissement de la surface de l'ouïe de sortie sur lequel débouche la rainure. Cette rainure permet d'éviter une accumulation de particules se situant entre le diamètre extérieur du piston et le diamètre intérieur de la chambre de mesure.

Toutefois sa mise en oeuvre pose certaines difficultés dans la mesure où les particules solides peuvent également se bloquer entre le diamètre intérieur du piston et le diamètre extérieur des cylindres inférieur et supérieur de la chambre.

La présente invention vise à fournir un compteur volumétrique de fluide du type à piston oscillant permettant d'éviter le blocage de particules solides entre le diamètre intérieur du piston et le diamètre extérieur des cylindres inférieur et supérieur de la chambre et assurant en outre l'évacuation des particules solides.

La présente invention propose à cet effet un compteur volumétrique de fluide du type à piston oscillant comprenant une chambre de mesure cylindrique incluant :
- une paroi latérale,
- un fond et un couvercle,
- un cylindre inférieur et supérieur de même diamètre inférieur au diamètre de ladite chambre,
- une ouïe d'entrée et une ouïe de sortie pour respectivement l'admission et l'évacuation du fluide dans ladite chambre,
- un piston de forme cylindrique disposé de façon excentrique et guidé cinématiquement dans ladite chambre, ledit piston effectuant un mouvement oscillant dans ladite chambre sous l'action du déplacement d'un volume de fluide,
- une cloison fixe séparant ladite ouie d'entrée et ladite ouie de sortie, ladite cloison s'étendant radialement entre ladite paroi latérale et lesdits cylindres inférieur et supérieur et axialement entre ledit fond et ledit couvercle,
caractérisé en ce que ledit compteur volumétrique comporte au moins une rainure verticale s'étendant au moins partiellement le long desdits cylindres inférieur et supérieur et en relation avec l'une desdites ouïes d'entrée ou de sortie, ladite rainure étant située à proximité de ladite cloison fixe.

Grâce à l'invention, le compteur permet d'éviter le blocage de particules solides entre le diamètre intérieur du piston et le diamètre extérieur des cylindres inférieur et supérieur de la chambre, les particules venant se placer dans la rainure verticale. Ce compteur permet également l'évacuation des particules par l'une des ouïes en relation avec la rainure.

De manière avantageuse, ladite rainure débouche sur un élargissement de l'une desdites ouïes.

Avantageusement, ladite rainure est tangente à ladite cloison fixe.

Avantageusement, ladite rainure a une largeur inférieure ou égale à 2mm.

D'autres caractéristiques et avantages de la présente invention apparaîtront dans la description suivante d'un mode de réalisation de l'invention, donné à titre illustratif et nullement limitatif.

Dans les figures suivantes :
- La figure 1 représente une vue en perspective éclatée d'un compteur volumétrique à piston oscillant selon l'art antérieur,
- La figure 2 représente une vue en coupe verticale selon le plan AA tel que représenté sur la figure 3 d'un compteur volumétrique selon l'invention,
- La figure 3 représente un compteur volumétrique selon l'invention en vue de dessus sans le piston et le couvercle,
- La figure 4 représente un agrandissement en vue de dessus d'une partie entourant la paroi fixe d'un compteur volumétrique selon l'invention.

Dans toutes les figures, les éléments communs portent les mêmes numéros de référence.

La figure 1 a déjà été décrite en relation avec l'état de la technique.

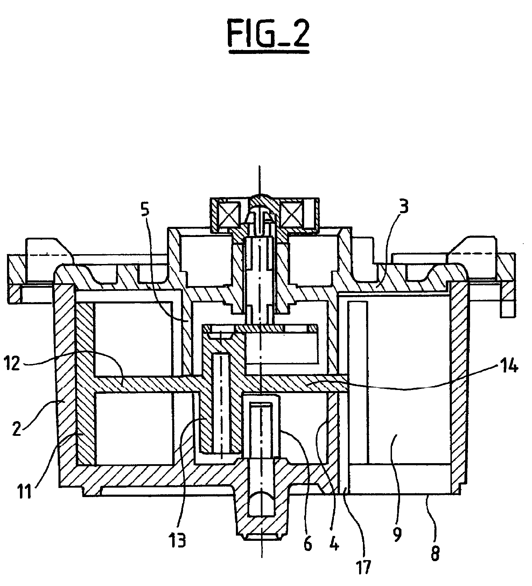

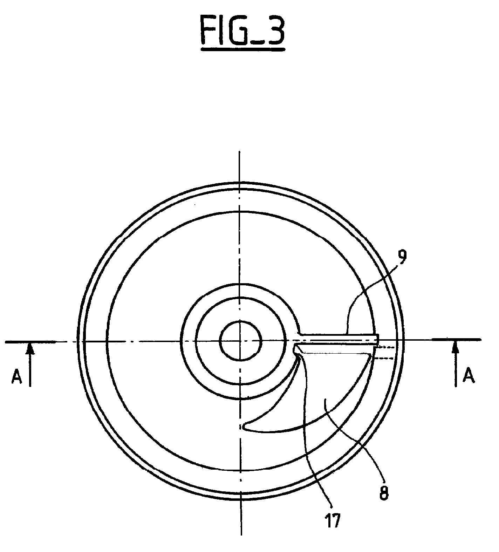

La figure 3 représente un compteur volumétrique selon l'invention en vue de dessus. La figure 2 représente une vue de ce même compteur volumétrique selon l'invention en coupe verticale selon le plan AA tel que représenté en figure 3.

Pour des raisons de clarté, le piston 11 et le couvercle 3 tels que représentés en figure 2 ont été volontairement omis sur la figure 3.

Le cylindre supérieur 5 comporte une rainure verticale 17, tangente à la cloison fixe 9 et se prolongeant sur le cylindre inférieur 4. La section de l'ouïe de sortie 8 est élargie de sorte que la rainure verticale 17 débouche sur cet élargissement. La rainure verticale 17 s'étend donc sur tout le long de la chambre de mesure.

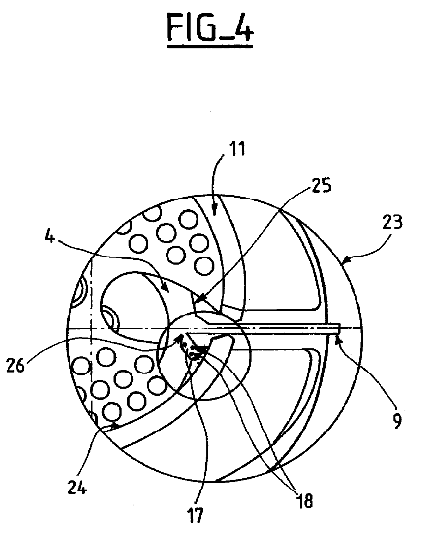

La figure 4 représente un agrandissement en vue de dessus d'une seconde partie 23 entourant la paroi fixe de séparation 9 montrant le fonctionnement de la rainure verticale 17 du compteur selon l'invention.

En présence d'un fluide « chargé », ce dernier contient des particules solides 18 qui viennent se placer entre le diamètre intérieur 24 du piston et le diamètre extérieur 25 des cylindres inférieur 4 et supérieur (non représenté) de la chambre de mesure. La rainure 17 qui se trouve à la fois sur les cylindres inférieur 4 et supérieur permet l'écoulement des particules 18.

La rainure 17 débouche sur un élargissement 26 de l'ouïe de sortie 8 qui permet l'évacuation des particules 18 s'écoulant le long de la rainure 17. La section de l'élargissement 26 est sensiblement identique à la section de la rainure 17, donc de faible section par rapport à la section de l'ouïe de sortie 8 afin de ne pas perturber la métrologie.

Bien entendu, l'invention n'est pas limitée au mode de réalisation qui vient d'être décrit.

En particulier, la rainure telle que décrite dans le mode de réalisation a été placée du côté de l'ouïe de sortie mais elle peut également être placée du côté de l'ouïe d'entrée.

En outre, on peut également prévoir une rainure de part et d'autre de la cloison fixe.

## Revendications

1. Compteur volumétrique de fluide du type à piston oscillant comprenant une chambre de mesure cylindrique (30) incluant :
- une paroi latérale (2),
- un fond (1 ) et un couvercle (3),
- un cylindre inférieur (4) et supérieur (5) de même diamètre inférieur au diamètre de ladite chambre,
- une ouïe d'entrée (7) et une ouïe de sortie (8) pour respectivement l'admission et l'évacuation du fluide dans ladite chambre,
- un piston (11) de forme cylindrique disposé de façon excentrique et guidé cinématiquement dans ladite chambre, ledit piston effectuant un mouvement oscillant dans ladite chambre sous l'action du déplacement d'un volume de fluide,
- une cloison fixe (9) séparant ladite ouie d'entrée (7) et ladite ouie de sortie (8), ladite cloison s'étendant radialement entre ladite paroi latérale (2) et lesdits cylindres inférieur (4) et supérieur (5) et axialement entre ledit fond (1) et ledit couvercle (3), **caractérisé en ce que** ledit compteur volumétrique comporte au moins une rainure verticale (17) s'étendant au moins partiellement le long desdits cylindres inférieur (4) et supérieur (5) et en relation avec l'une desdites ouïes d'entrée (7) ou de sortie (8), ladite rainure (17) étant située à proximité de ladite cloison fixe (9).

2. Compteur volumétrique selon la revendication 1 **caractérisé en ce que** ladite rainure verticale (17) débouche sur un élargissement (26) de l'une desdites ouïes.

3. Compteur volumétrique selon l'une des revendications 1 ou 2 **caractérisé en ce que** ladite rainure verticale (17) est tangente à ladite cloison fixe (9).

4. Compteur volumétrique selon l'une des revendications 1 à 3 **caractérisé en ce que** ladite rainure verticale (17) a une largeur inférieure ou égale à 2 mm.
